Europäisches Patentamt

(19) European Patent Office  (11) Publication number: **0 150 901**
Office européen des brevets  **A2**

(12) **EUROPEAN PATENT APPLICATION**

(21) Application number: **85300048.7**  (51) Int. Cl.⁴: **B 23 B 27/04**

(22) Date of filing: **04.01.85**

(30) Priority: **06.01.84 GB 8400258**
**07.12.84 GB 8430932**

(43) Date of publication of application: **07.08.85**
**Bulletin 85/32**

(84) Designated Contracting States: **AT BE CH DE FR GB IT LI NL SE**

(71) Applicant: **GENERAL ELECTRIC COMPANY, 1 River Road, Schenectady New York 12305 (US)**

(72) Inventor: **Hale, Alan Arthur, Byways Shootersway Lane, Berkhamsted Herts HP4 3NN (GB)**

(74) Representative: **Turner, Paul Malcolm et al, PAUL M. TURNER AND COMPANY European Patent Attorneys 47 Marylebone Lane, London W1M 6DL (GB)**

(54) Grooving insert.

㊼ The present invention discloses a double edged grooving insert 10 in the form of an irregular hexahedron in which cutting edge A is in a plane substantially but not entirely at right angles (due to the required geometry) to cutting edge B. The surface 12 extending away from the cutting edge A towards the end of the insert at which cutting edge B is positioned narrows in width. Each cutting edge A and B provides the maximum dimension of the insert when in an operable position and when measured along any line parallel to the cutting edge. Thus, clearance is provided for the cutting tool to pass down the groove, the cutting depth of which is unlimited by the configuration of the insert. When cutting edge B is placed in a working position in the grooving tool, the surface 14 containing cutting edge B increases in width from the end of the insert at which cutting edge A is positioned towards the cutting edge B.

1

## GROOVING INSERTS

The present invention relates to grooving inserts. In particular, it relates to a grooving insert having two identical cutting edges.

Prior art grooving inserts for unlimited cutting depth have one cutting edge. The design of the grooving insert means that the cutting edge is the widest portion of the insert. Inserts used generally have further cutting edges in the same plane as a first cutting edge, the insert being indexable such that a second or subsequent cutting edge is in turn placed in the cutting position. Grooving inserts with single cutting edges are generally used in tools such that the width of the tool is less than the width of the cutting edge. Thus, when cutting a groove the the cutting edge removes metal to a maximum width of the cutting edge and the body of the tool can pass freely between the grooved portions of the workpiece allowing a groove to be cut of greater depth than the insert length. It has not been possible to provide a second cutting edge or further cutting edges as in conventional inserts without limiting the depth of cut, because the width of the second cutting edge would be such that it would jam within the grooved portions of the workpiece. Double edged grooving inserts are known but have a depth restriction which is dependent on the construction of the insert, i.e. the groove depth cannot exceed the insert length.

The present invention attempts to overcome these problems by providing an insert with two cutting edges without depth of cut limitations.

GB335489 shows a cutting insert with four cutting edges on a trapezoidal extension for screw cutting devices.

GB1196667 describes a straight grooving insert having parallel edges.

0150901

2

GB1256793 describes a parting insert with cutting edges at opposite edges, the cutting edges being in substantially the same plane. The width of the cutting edges limits the depth of cut of insert.

None of the above described inserts can be utilized as a grooving insert in which the insert has more than one cutting edge and yet not be limited in the depth of cut by the width of the insert.

GB1510008 describes a pyramidal insert with three cutting edges. However, the pyramidal insert has cutting edges with sharp angled points which introduces points of weakness. In addition the pyramidal insert is difficult to clamp in a grooving tool.

The present invention provides a cutting insert having two cutting edges lying in different planes, the body of the insert narrowing in width as it extends away from each of the cutting edges when in an operable position to provide a grooving depth unlimited by the configuration of the insert.

According to the present invention, there is provided a cutting insert having an insert body with a first and a second cutting edge of equal width at each end of the insert body, the body of the insert narrowing in width as it extends away from the first cutting edge towards the second cutting edge such that the width of each of the cutting edges provides the maximum width of the insert in the planes of the cutting edge, each cutting edge lying in different plane from the other.

In one embodiment, the first cutting edge is at right angles or substantially at right angles to the second edge. Generally the first cutting edge is at right angles plus or minus the clearance angle of the insert.

In one embodiment, the present invention provides a cutting insert as described above having four planar side faces and two planar end faces, the first cutting edge being provided at the angle between one planar side face and one planar edge face, the planar edge face narrowing in width as it extends away from the planar side face, and adjacent planar side face to the said one planar side face having the second cutting edge at the junction between the other planar end face and said adjacent planar side face, said adjacent planar side face narrowing in width as it extends towards the one planar side face.

An insert constructed in the above manner provides clearance for the cutting tool as it passes along a groove. The cutting edge is the widest point of the cutting insert when considered in relation to any planar surface including the cutting edge and parallel to it, and the planar face extending away from the cutting edge narrows in width. When the first cutting edge is placed in a working position in a grooving tool, the planar face containing the cutting edge narrows in width and allows clearance within the groove. The body of the grooving tool which is narrower than the width of the cutting edge can therefore pass within the groove cut in the workpiece to any required depth without being limited by the length of the cutting insert. During use of the grooving insert the cutting edge becomes dull. The grooving insert can be removed from the tool body and repositioned so that the second cutting edge is placed in the working position in the grooving tool. Because of the geometry of the cutting insert, the second cutting edge formed at the junction between the side face and the planar end face is positioned such that the planar side face narrows in width in a similar manner to that contained in the first cutting edge and once again can pass within the groove cut to any required depth.

4

Thus, the present invention provides a cutting insert for a grooving tool having a first and second cutting edge, the cutting insert being an irregular six-sided polyhedron (hexahedron) having four planar side faces and two planar end faces, a first and second planar side face having substantially the same shape, the first cutting edge being formed at the junction of a planar end face and the first planar side face, the width of which narrows as it extends away from the cutting edge towards the second planar end face, the second cutting edge being formed at a junction between the second planar side face and the second end face such that the width of the planar side face narrows as it extends towards the first planar end face.

In another aspect, the present invention provides a grooving insert having a first and a second cutting edge, the width of the insert when measured along any line parallel to the cutting edge which is an operable position being less than the length of the cutting edge.

The present invention will be further described by way of example only, with reference to the accompanying drawings, in which:-

Figures 1 and 2 show prior art grooving inserts with two cutting edges;

Figures 3a and 3b show the grooving insert of the present invention;

Figure 4 shows a top view of the grooving insert of the present invention in a tool holder;

Figures 5 and 6 show a side view and end view respectively of a grooving insert;

Figures 7 to 9 show a further embodiment of the present invention;

Figure 10 shows an exploded view of the insert of Figures 7 to 9 in a tool holder; and

Figures 11 and 12 show suitable geometry for the insert of the present invention.

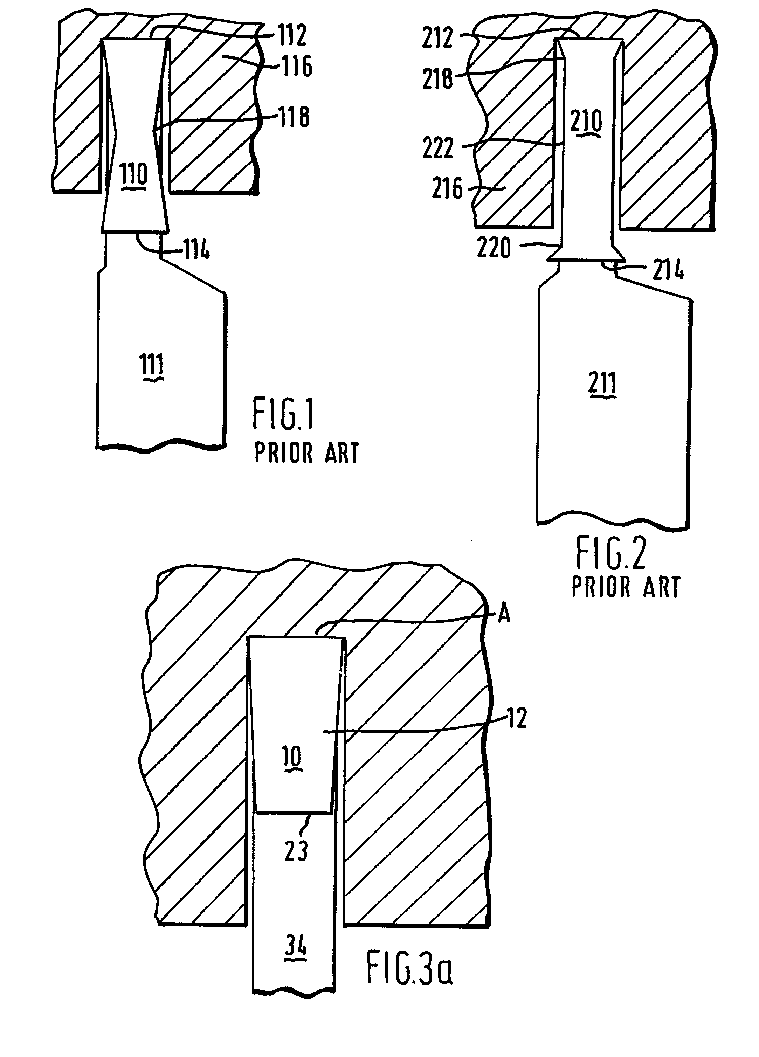

In Figure 1, insert 110 when viewed from above and partial cross-section mounted on tool holder 111 (diagrammatic) is "butterfly" or "bow-tie" shaped and has cutting edges 112 and 114 of equal width and lying in the same plane. As shown, cutting edge 112 is the operable cutting edge within the workpiece 116 being grooved. A waist 118 divides the two ends of the insert from a narrow point such that clearance is provided in the cut groove behind the insert cutting edge 112. However, because it widens once again towards cutting edge 114 the depth of cut is restricted to a depth less than the distance between the two cutting edges 112,114. This clearance is necessary to prevent the cutting insert from jamming within the groove. Another problem with the cutting insert 110 is that the waist 118 provides a weak point, and thus a point for breakage of the insert.

Figure 2 shows an insert 210 currently referred to as a "dog bone" insert when viewed incross-section on tool holder 211 (diagrammatic). Cutting edges 212 and 214 having equal width are provided lying in the same plane, cutting edge 212 being the operable cutting edge within the workpiece 216 being grooved. The "dog bone" insert 210 has two waists 218,220 which divide the two ends of the insert by means of a stem 222. Stem 222 provides clearance behind the cutting edge 212. The insert widens once again from waist 220 to cutting edge 214 restricting the depth of groove, although it allows a greater groove depth than the insert shown in Figure 1. The disadvantage of insert 210 over the insert 110 is that it has two weak points and thus two breakage points for the insert.

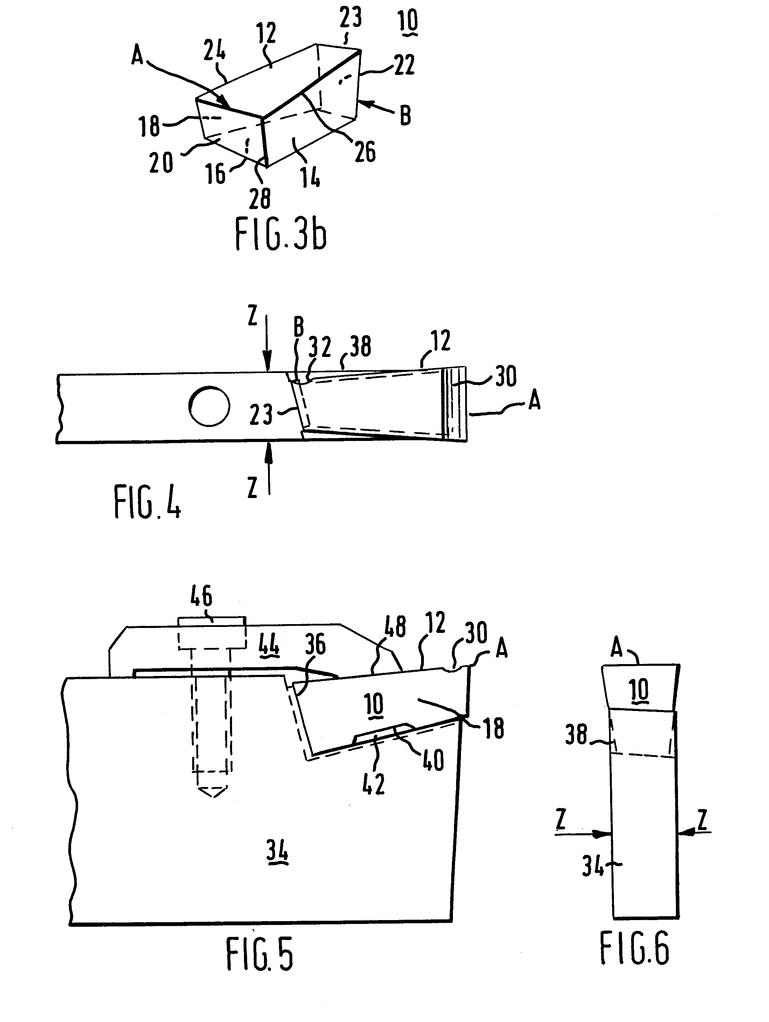

With reference to Figures 3a and 3b, a grooving insert

6

10 having two cutting edges A and B is provided. The grooving insert has four planar side faces 12, 14, 16 and 18 and two planar end faces 20 and 22. Adjacent side faces 12 and 14 are substantially the same shape as one another but lie in different planar orientations. In fact, the adjacent side faces 12 and 14 are mirror images of one another. Similarly, side faces 16 and 18 are mirror images of one another. Cutting edge A is provided at the junction between the planar side face 12 and the planar end face 20. Cutting edge B is provided at the junction between planar side face 14 and planar end face 22. Cutting edge A and B are in different planar orientations but are otherwise similar to one another. This enables the orientations of the insert to be changed to enable a new cutting edge to be offered to the workpiece once the first cutting edge has been sufficiently worn. The depth of groove cut by the insert is not limited by the width or length of the insert. Planar side face 12 as it extends from both cutting edge A and planar end face 20, substantially narrows in width in the plane of the side face 12 until it reaches the second planar end face 22 terminating in edge 23. Edge 23 has a lesser width than cutting edge A.

Cutting edge B is formed at the junction between the planar side face 14 and the planar end face 22. The width of the planar side face 14 becomes narrower within the plane of the side face as it extends away from both cutting edge B and planar end face 22 towards planar end face 20. The remaining two planar sides 16 and 18 are the bottom faces opposed to the planar side faces 12 and 14 respectively and provide the necessary seating faces within a grooving tool to enable the cutting edges A and B to be operative.

As shown in Figure 4, a chip breaker 30 can be provided

7

behind each cutting edge. This can be of any suitable shape of known chip breakers. As shown, the chip breaker 30 is a radiused groove extending across the cutting insert parallel to the cutting edge A. A further chip breaker 32 can be provided for cutting edge B. However, any known shape of chip breaker can be provided.

As shown in Figures 4 to 6, a tool holder 34 is provided for the insert 10 of the present invention although Figures 4 and 6 do not show a clamp. The insert 10 is mounted in a pocket 36 of complimentary shape to receive the insert. The width of the tool holder 34 as shown in Figures 4 and 6 at points Z-Z is less than the length of the cutting edge A allowing the tool holder to be received within any groove cut by the insert 10 and to provide clearance for the tool holder 34 within the groove. This means that the depth of groove cut by the insert of the present invention is limited by the dimension of the tool holder 34 and not the dimension of the insert as in the prior art inserts. The tool holder 34 may have a locating web 38 extending upwards from the pocket 36 on the deep side of the insert i.e. the side of the insert upon which cutting edge B is located. The locating web 38 can prevent sideways movement of the insert when the insert is under cutting conditions.

On the shallow side of the insert, as shown in Figure 5, an optional flap 40 can be pressed or moulded into the insert on side 18 with a corresponding locating piece 42 on the tool holder to prevent further side slipping of the insert under cutting conditions.

To clamp the insert in position a clamp 44 is provided (Figure 5) having a locating screw 46 which passes through the clamp 44 to the tool holder 34. The clamp 44 has a flat locating portion 48 which applies pressure to the insert 10 under cutting conditions to keep the insert in the required position. The screw/clamp mechanism may be perpendicularly disposed as shown in the drawings. Alternatively, the screw may be angled to provide the necessary pressure. Other clamps may also be used.

When Figures 4 and 6 are considered with cutting edge A in the operable position but without the clamp 44 being shown, it can be seen that cutting edge A provides the maximum dimension of the insert when measured along any line parallel to the cutting edge. The cutting insert of the present invention does not have any weak points when compared to the prior art inserts.

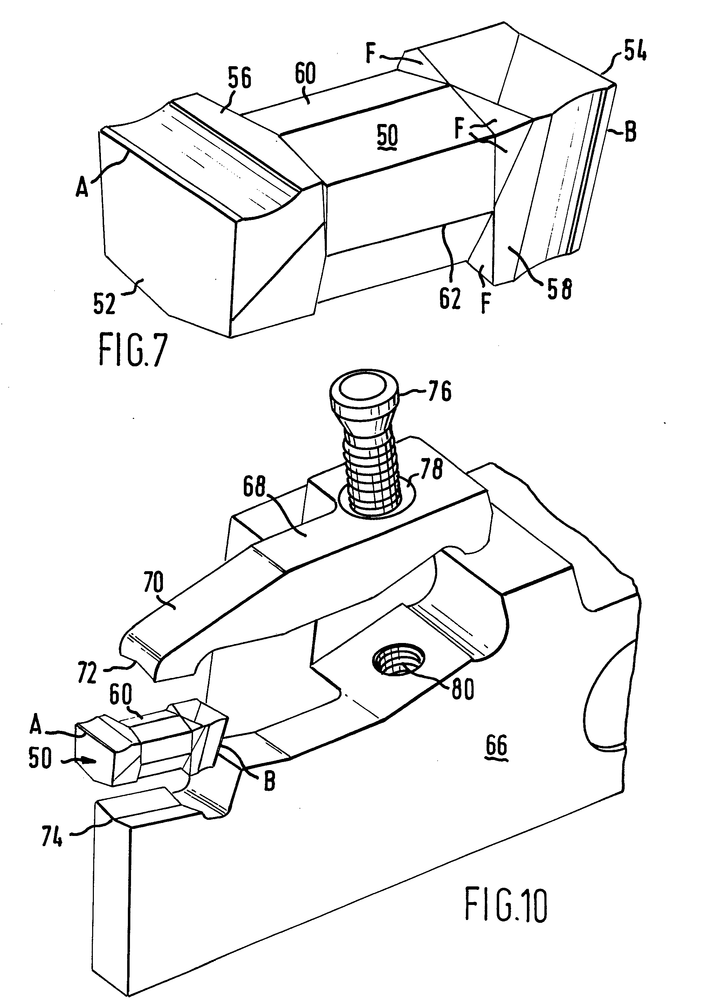

The insert shown in Figures 3a and 3b demonstrates the broad concept of the present invention. An alternative embodiment will now be described with reference to Figures 7, 8 and 9. This embodiment shows a modified version of the insert of Figures 3a and 3b to facilitate clamping of the insert in a tool holder.

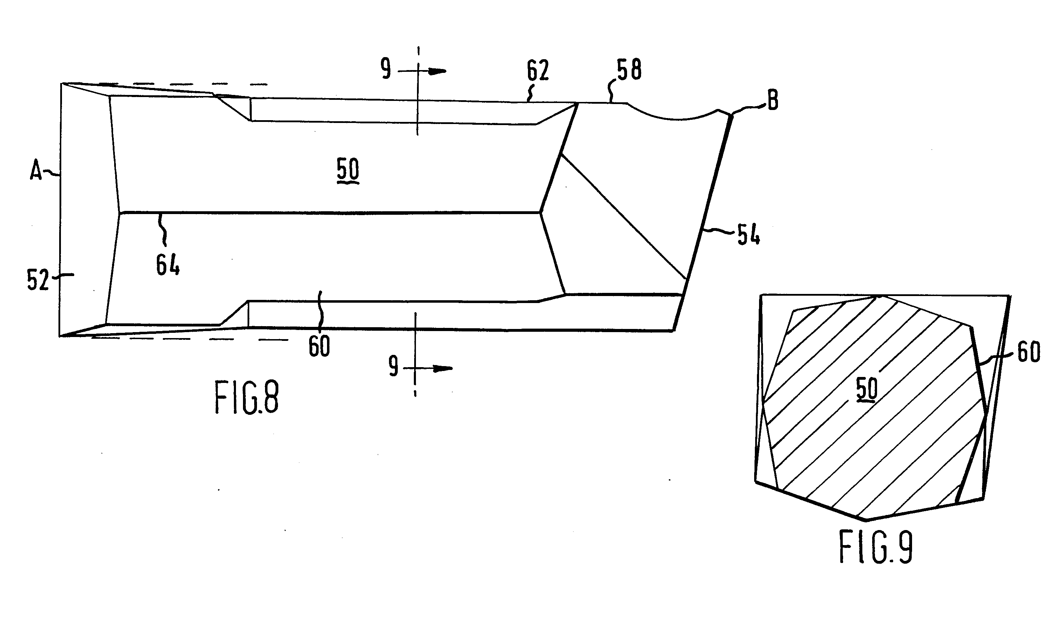

Figure 7 is isometric view of the insert of the present invention, showing the two cutting edges A and B. Figure 8 is a plan view from below showing clearly the shape of the insert, particularly as regards the locating portion 60.

Referring to Figure 7, an insert 50 has cutting edges A and B at each end 52 and 54 of the insert. The ends 52 and 54 are substantially planar end faces. The cutting edges A and B are formed at the junction of planar end faces 52 and 54 and side faces 56 and 58, respectively. These correspond to the side faces 12 and 14 of Figure 3a, but are interrupted by a locating portion 60. The width of each of the cutting edge A and B is the same and each cutting edge A and B lays in a different plane from the other. Preferably, this plane is at right angles or

9

substantially at right angles to the said cutting edge.
The difference from a right-angled planar orientation may
vary according to the working clearance angle required for
each of the cutting edges A and B. Thus, the cutting edges
A and B may lay in planes which are at right angles plus or
minus the working clearance angle of the cutting edge, the
plus or minus being dependent on the base line for measuring
the clearance angle. Because the planar orientations of
the cutting edges A and B are different, the width of each
of the cutting edges A and B provides the maximum width of
the insert in the plane of the cutting edge, allowing a
grooving depth which is not limited by the length of the
insert when the insert is in use.

The side faces 56 and 58 are substantially the same
shape as one another, but lie in different planar
orientations. The adjacent side faces 56 and 58 are
preferably mirror images of one another.

As already indicated, the side faces 56 and 58 are
interrupted by a central locating portion 60 to allow
clamping of the insert in a tool holder. The locating
portion 60 is preferably a regular octahedron in cross-
section which allows the insert 50 to be received in a
corresponding portion in the tool holder (described below).
The central locating portion 60, although preferably being
a regular hectahedron, can also be of other shapes, for
examples, square or rectangular, or hexagonal in cross-
section depending on the locating requirements in a
suitable tool holder. Figure 9 shows the regular
octahedron in cross-section and is a view from points 9-9
of Figure 8. The extent of the ridges 62 and 64 of the
locating portion 60 is shown in Figure 8. The ridge 62
extends to the planar surface 58 and the ridge 64 extends
to the end surface 52. Such extensions of the ridges 62

10

and 64, as well as the other points of the locating portion, allow an insert shape which does not have the disadvantages of the prior art as shown in Figures 1 and 2. This disadvantage is that the "butterfly" or "bow-tie" insert of Figure 1 has a waist 118 which forms a point of weakness. The "dog-bone" insert 210 of Figure 2 has two waists 218 and 220 which form two points of weakness. The design of the insert of this embodiment, although has constriction to enable the locating portion to be provided between the planar surfaces 56 and 58, does not form a constriction or waist which completely surrounds the insert as can be clearly seen from Figure 8. In addition to the central locating portion 60, the insert 50 includes various facets F to provide a transition between the central locating portion 60 and the side faces 56,58 etc. These facets are not of any particular shape other than that dictated by the functional nature of the central locating portion 60 and the side faces.

In essence, the insert described with reference to Figures 7 to 9, is substantially the same as the insert shown in Figure 3B, but in addition has the central locating portion 60. The same criteria as applied to insert 10 applies to this particular insert 50, i.e. that the insert 50 has a maximum width when measured in the plane of the cutting edge A because the cutting edge B, although of the same width as cutting edge A, lies in a different plane. Thus the whole length of the insert can pass between the hatched lines as shown in Figure 8 when cutting A is used as the operative cutting edge. As already indicated, the limitation of grooving depth is therefore based on the limitations of the tool holder rather than the length of the cutting insert 50.

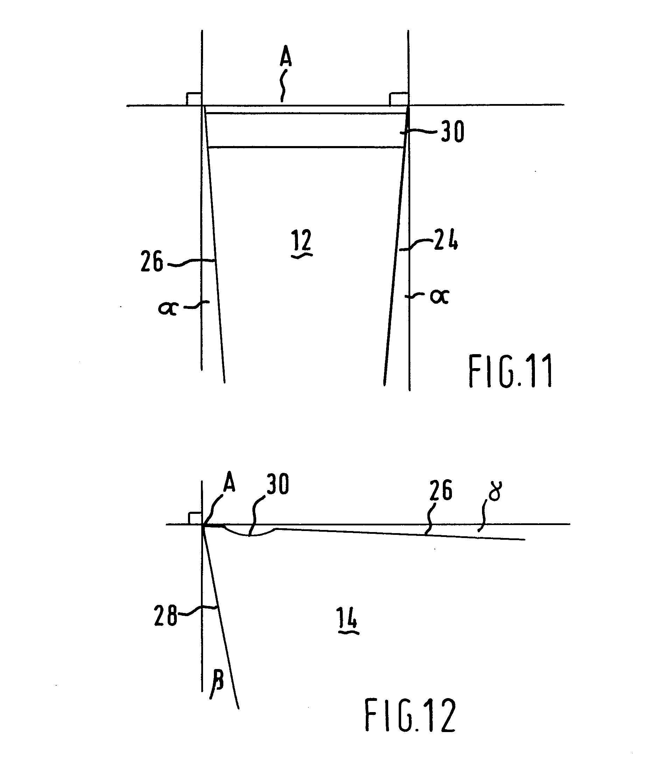

The cutting insert provides two cutting edges on a grooving insert, the two cutting edges A and B being of equal width and the depth of the groove cut by the insert is not constrained by the width of those cutting edges A and B. Figure 10 shows a suitable tool holder 66 for the insert 50 of Figure 7. A clamp 68 has a clamping arm 70 which has a V-shaped receiving portion 72 for the locating portion 60 and, in particular, the ridge of the locating portion 60. A corresponding V-shaped portion 74 is provided on the tool holder 66 for the opposite ridge of the locating portion 60. The clamp 68 is held in position by a clamping screw 76 which extends through a locating hole 78 to a threaded hole 80 in the body of the tool holder 66. The insert 50 is in an operable position in the tool holder and offers the cutting edge A which provides the maximum width of the insert and the tool holder in this plane. Cutting edge B is protected from the side walls of the cut groove and width of cutting edge B does not provide anylimitation to the depth of cut by the insert 50. The insert can therefore be indexed. The clamp is released and the insert 50 is re-orientated allowing cutting edge B to be offered to the workpiece. Once again, because of the different planar orientation of the two cutting edges A and B, cutting edge A, although the same width as cutting edge B, does not offer any wider limitations. The clamping arm assembly 68 is of generally conventional type except for the locating valley 72 and 74.

Although the grooving inserts have been particularly described above, the geometry of the grooving insert is variable according to the requirements of the user and as is generally known in the art. Basically, the geometry of the cutting insert is set by the requirements of the grooving tool, for example, the rake clearance and the groove clearance.

12

An example of suitable geometry is described with reference to Figures 11 and 12. Figure 11 shows a top view of the insert of Figures 3a and 3b showing side face 12 with cutting edge A and side edges 24 and 26. Figure 12 shows a side view of the same insert showing cutting edge A and side edges 26 and 28 to face 14. In both figures an example of a chip breaking groove 30 is shown. Although the geometry of an insert of Figures 3a and 3b is described, the following description with reference to Figures 11 and 12 applies to the insert as shown in Figures 7 to 9.

Taking cutting edge A as a base line, the groove clearance angle may specifically be three degrees, although may be in the range $0.5^{\circ}$ to $6^{\circ}$. If a $3^{\circ}$ clearance is taken, the side edges 24 and 26, when taken in the plane of the side face 12, will each be at an angle of $87^{\circ}$ to the cutting edge A (see Figure 11). The front clearance angle may be, for example, $5^{\circ}$ although this may vary in the range $0^{\circ}$ to $10^{\circ}$ and the top surface may have a top rake angle of $-15^{\circ}$ to $20^{\circ}$ although it is generally in the range $-10^{\circ}$ to $20^{\circ}$ such that the edge 26 extends away from the cutting edge A (see Figure 12). The groove clearance angle , front clearance angle , top rake angle between the planar surface 14 and planar end surface 28 are the same in order to provide an exactly similar face 14 as the first face 12.

These rake groove clearance angles , front clearance angles , top rake angles are repeated for the cutting edge B. The geometrical combination for any particular insert sets the remaining shape for the whole of the cutting insert 10.

Face 14 on Figure 11 can be at right angles to face 12 for the insert of Figure 7, or at $90^{\circ}$ minus clearance angle if measured within the structure of the insert for an

13

alternative version of the insert of Figure 7, or the insert of Figure 3b.

With planar faces as shown in Figure 3b, the cutting edges A and B will always be at an angle of $90^{\circ} \pm$ the working clearance angle. However, with the insert of Figure 7, because the planar faces are split by the locating portion 60, the faces may be orientated by the working clearance angle to allow the cutting edges A and B to be perpendicular to one another.

The size of the insert may vary according to the end use. For example, the length of the cutting edges may vary from a width dependent upon the minimum width of the holder constrained by the physical make-up of the clamping device. Thus the cutting edge may have a width of 2 mm up to any required size suitable for heavy duty grooving.

The material from which the insert may be constructed is any one of the materials currently used for inserts such as tungsten carbide, ceramics, ceramic coated tungsten carbides, cubic boron nitride, capped cubic boron nitride, high speed steel, or capped diamond.

Other details on the insert are also added to the insert as necessary. For example, the cutting edges on the insert may or may not include chip breakers as desired. These chip breakers are of any of the conventional types of chip breakers such as grooves, tapered chip breakers, raised chip breakers, raised dimples, sunken dimples etc. A suitable chip breaker is one which is a radiused depression extending across the width of the insert immediately behind the cutting edge preferably separated by a narrow land, for example as shown in Figures 4 and 5.

Although a particular asymmetrical inserts have been described, the inserts can be made asymmetrical in other planes.

14

## CLAIMS

1. A cutting insert having an insert body with a first and a second cutting edge of equal width at each end of the insert body, the body of the insert narrowing in width as it extends away from the first cutting edge towards the second cutting edge such that the width of each of the cutting edges provides the maximum width of the insert in the planes of the cutting edge, each cutting edge lying in different plane from the other.

2. A cutting insert as claimed in claim 1, wherein the first cutting edge is at right angles or substantially at right angles to the second cutting edge.

3. A cutting insert as claimed in claim 2, wherein the first cutting edge is at right angles plus or minus the working clearance angle of the second cutting edge.

4. A cutting insert as claimed in any one of the preceding claims, wherein the cutting insert has the first cutting edge on a first face, the width of the first face parallel to the cutting edge, narrowing as it extends away from the cutting edge, and a second cutting edge on a second face, the width of the second face parallel to the cutting edge narrowing as it extends towards the first cutting edge.

5. A cutting insert as claimed any one of the preceding claims, wherein the cutting insert has four planar side faces and two planar end faces, the first cutting edge being provided at the angle between one planar side face and one planar edge face, the planar edge face narrowing in width as it extends away from the planar side face, an adjacent planar side face to the said one planar side face having the second cutting edge at the junction between the other planar end face and said adjacent side face, said adjacent planar side face narrowing in width as it extends towards the one planar side face.

15

6.    A cutting insert as claimed in any one claims 1 to 4, having a central locating portion between the first and second cutting edge for locating the insert in a tool holder.

7.    A cutting insert as claimed in claim 6, wherein the central portion is a regular polygon in cross-section.

8.    A cutting insert as claimed in claim 6, wherein the central portion is a regular octahedron in cross-section.

9.    A cutting insert as claimed in claim 6, wherein the central portion is square or rectangular in cross-section.

10.    A cutting insert for a grooving tool having a first and a second cutting edge, the cutting insert being an irregular hexahedron having four planar side faces and two planar end faces, a first and second planar side face having substantially the same shape, the first cutting edge being formed at the junction of a planar end face and the first planar side face, the width of which narrows as it extends away from the cutting edge towards the second planar end face, the second cutting edge being formed at a junction between the second planar side face and the second planar end face such that the width of the planar side face narrows as it extends towards the first planar end face.

Paul M. Turner and Company
Chartered Patent Agents
European Patent Attorneys
47, Marylebone Lane,
London W1M 6DL.

112
116
118

110

111

114

FIG.1
PRIOR ART

212
218

210

222
216

220

214

211

FIG.2
PRIOR ART

A

10

12

23

34

FIG.3a

FIG.3b

FIG.4

FIG.5

FIG.6

0150901

FIG.7

FIG.10

FIG.8

FIG.9

50

52

64

60

A

62 58 B

9

9

54

4/5

0150901

A

30

12

26

24

α            α

**FIG.11**

A   30        26   γ

28        14

β

**FIG.12**